# EUROPÄISCHE PATENTSCHRIFT

(11) **EP 0 430 199 B1**
(45) Veröffentlichungstag und Bekanntmachung des Hinweises auf die Patenterteilung: **06.09.1995**
(21) Anmeldenummer: 90122729.8
(22) Anmeldetag: 28.11.1990
(51) Int. Cl.: C08J 11/06, C08J 3/12, B29B 17/00

(54) **Verfahren zur Herstellung von rieselfähigen Mischungen von mit Klebstoff beschichteten Kunststoffabfällen und derartige Mischungen**
Process for preparing free-flowing mixtures of adhesive coated waste plastic material and the related mixtures
Procédé pour préparer des mélanges coulants à base de déchets de matières plastiques revêtus de colle et les mélanges y relatif

(30) Priorität: 01.12.1989 DE 3939810
(43) Veröffentlichungstag der Anmeldung: 05.06.1991
(73) Patentinhaber: HOECHST AKTIENGESELLSCHAFT, 65926 Frankfurt am Main (DE)
(72) Erfinder: Martl, Gerwald, W-8269 Burgkirchen (DE); Sextl, Helmut, W-8261 Winhöring (DE)

(56) Entgegenhaltungen:
- DE-C- 3 936 063
- DATABASE WPIL, Accession Nr. 81-04722D [04], Derwent Publications Ltd, London, GB; & JP-A-55 148 294
- DATABASE WPIL, Accession Nr. 82-31821E [16], Derwent Publications Ltd, London, GB; & JP-A-57 042991
- DATABASE WPIL, Accession Nr. 82-24763E [13], Derwent Publications Ltd, London, GB; & JP-A-57 029 691
- RESEARCH DISCLOSURE, Nr. 216, April 1982, Seite 109, Zusammenfassung Nr. 21620, Havant Hampshire, GB; Thermoplastic granules of improved flowability"

## Beschreibung

Die Erfindung betrifft ein Verfahren zur Herstellung einer rieselfähigen Mischung von Polyethylen-, Polypropylen-, Polystyrol-, Polyester- oder Polyvinylchlorid-Kunststoffabfall beschichtet mit wasser- und glykolunlöslichem Klebstoff auf der Basis von Kautschuk. Die Erfindung betrifft ferner bestimmte Mischungen dieser Art.

Es ist schon seit langem bekannt, Kunststoffabfälle verschiedenster Art und Herkunft in rieselfähige Mischungen überzuführen, vergleiche US-Patentschrift 4 067 826. Rieselfähige Mischungen sind die Voraussetzung für eine wirtschaftliche Weiterverarbeitung auf Extrudern, Kalandern, Spritzgußeinrichtungen und dergleichen, wobei vielfach verwendbare Endprodukte, zum Beispiel Folien, Platten, Profile oder Rohre, erhalten werden und somit der Recycling-Prozeß in vorteilhafter Weise abgeschlossen ist.

In DE-A-39 36 063 wird ein Verfahren zum Abtrennen von Polyurethanschaum- und/oder -Klebstoffen aus Verbundbauteilen beschrieben, wobei die Verbundbauteile in zerkleinerter Form in Drehrohrbehältern mit Kaliumpermanganatlösung einer Oxidation unterworfen werden. Dadurch wird das elastische und adhäsive Polyurethan in einen klebfreien, pulvrigen Zustand überführt, in dem es leicht von der Verbundkomponente entfernt werden kann. Das nicht angegriffene thermoplastische Material wird durch Klassieren von der Lösung, dem Polyurethanoxidationsprodukt und dem ausgefallenen Mangandioxid abgetrennt, mit Wasser gewaschen, getrocknet und in üblichen Verarbeitungsverfahren zu Gegenständen ausgeformt.

Die Aufgabe der Erfindung liegt darin, ein Verfahren zur Herstellung von rieselfähigen Mischungen von mit wasser- und glykolunlöslichem Klebstoff auf der Basis von Kautschuk beschichtetem Kunststoffabfall aus Polyethylen, Polypropylen, Polystyrol, Polyester oder Polyvinylchlorid zur Verfügung zu stellen. Für solche Kunststoffabfälle ist bisher - im Hinblick auf den erwähnten Recycling-Prozeß - kein wirtschaftliches Aufbereitungsverfahren beschrieben worden.

Das erfindungsgemäße Verfahren ist dadurch gekennzeichnet, daß
a) der mit Klebstoff beschichtete Kunststoffabfall in Gegenwart von 1 bis 30 Gew.-Teilen flüssigem Wasser und/oder Glykolen pro 100 Gew.-Teile Kunststoffabfall bei 10 bis 30 °C zerkleinert wird, und
b) die durch Verwendung eines Siebes, durch Dekantieren oder Zentrifugieren von der Flüssigkeit abgetrennten Kunststoffabfallteilchen auf einen Restflüssigkeitsgehalt von 0,5 bis 5 Gew.-%, bezogen auf das Gewicht der rieselfähigen Teilchenmischung, eingestellt werden.

Das erfindungsgemäße Verfahren beruht auf der überraschenden Feststellung, daß beim Zerkleinern von Abfällen, wie sie zum Beispiel bei der Herstellung und/oder Verarbeitung von thermoplastischen Klebebandfolien anfallen, ein Verkleben der Abfälle untereinander und auf den Innenausstattungen der Zerkleinerungsvorrichtungen und deren Nachfolgeeinrichtungen dann vermieden wird (ein Verkleben und Verklumpen würde den Zerkleinerungsprozeß unmöglich machen), wenn das Zerkleinern in Gegenwart von Wasser und/oder Glykolen ausgeführt wird, wobei das Wasser und/oder Glykole kein Lösungsmittel für den Klebstoff darstellt. Das Wasser und/oder Glykole wirken offensichtlich gleichsam als Separationsschicht, die das genannte Kleben und Verklumpen verhindert. Es ist ferner gefunden worden, daß die erhaltenen und vom Großteil des eingesetzten Wassers und/oder Glykols abgetrennten Teilchen, zum Beispiel Schnitzel, dann eine Mischung von einander losgelösten (selbständigen) Teilchen, das heißt eine rieselfähige Mischung bilden, wenn die Mischung eine bestimmte Menge Wasser und/oder Glykol enthält. Dieser Restanteil wirkt offensichtlich wiederum als Separationsschicht oder Separationsfilm zwischen den einzelnen Teilchen. Schließlich ist auch noch festgestellt worden, daß die Trennwirkung des Wassers und/oder Glykols durch ein Netzmittel erhöht werden kann.

Der Abfall kann in Form von endlosen Folien, Folienstücken, Platten, Profilen, Rohren und dergleichen vorliegen. In der Regel handelt es sich um Abfall, wie er bei der Herstellung und/oder Verarbeitung von thermoplastischen Klebebandfolien, vorzugsweise Polyvinylchlorid-Klebebandfolien anfällt. Dieser Abfall liegt im allgemeinen in Form von Randschnitten, Randschnittwickel, Ausschußware verschiedenster Art und dergleichen vor. Die in Rede stehenden Abfälle sind mehr oder weniger stark mit Klebstoff beschichtet, das heißt, daß auch klebstofffreie Abfallflächen dabei sein können. So sind zum Beispiel die erwähnten Randstreifen aus der Klebebandfolienherstellung bekanntlich teils mit Klebstoff bedeckt und teils klebstofffrei. In der Regel wird es sich also um Abfall handeln, bei dem mindestens etwa 50 % der gesamten Fläche mit Klebstoff beschichtet sind. Die Dicke der Klebstoffschicht ist nicht kritisch. Sie liegt bekanntlich im allgemeinen im Bereich von 0,01 bis 0,05 mm.

Zum Zerkleinern der Abfälle können die üblichen Kunststoffzerkleinerungsvorrichtungen eingesetzt werden. Im Rahmen der vorliegenden Erfindung wird die Zerkleinerung vorzugsweise mit Hilfe der bekannten Schneidmühlen durchgeführt. Dabei wird der Abfall vorzugsweise in sogenannte Schnitzel zerkleinert oder zerschnitten. Die Größe der Schnitzel (Korngröße) kann innerhalb weiter Grenzen variieren. Sie liegt im allgemeinen (ebenso wie die Schnitzelgröße, die bei nicht mit Klebstoff beschichteten Abfällen angestrebt wird) bei 1 bis 10 mm, vorzugsweise 3 bis 7 mm. Es ist aber ohne weiteres möglich, auf eine Korngröße von über 10 mm und von unter 1 mm, zum Beispiel auf 0,5 bis 0,8 mm, zu zerkleinern.

Das Zerkleinern wird erfindungsgemäß in Gegenwart von Wasser und/oder Glykolen, insbesondere Wasser, durchgeführt. Im Falle von Glykolen wird man vorzugsweise Monoethylenglykol oder Diethylenglykol, deren C₁ bis C₄-Alkyl-monoether oder C₁ bis C₄-Alkyl-diether sowie die entsprechenden Propylenglykolverbindungen einsetzen. Die Flüssigkeit, Wasser und/oder Glykol, hat in der Regel eine der Jahreszeit entsprechende Temperatur, das sind etwa 10 bis 30 °C; dies ist auch die Temperatur, bei der der Zerkleinerungsvorgang abläuft. Die Flüssigkeitsmenge liegt bei 1 bis 30 Gew.-Teilen, vorzugsweise 3 bis 15 Gew.-Teilen, pro 100 Gew.-Teile Kunststoffabfall. Im Falle der genannten Schneidmühle wird man die Flüssigkeit - zweckmäßigerweise mittels Düsen - in den Abfallaufgabeschacht der Schneidmühle einführen. Die Flüssigkeit wird in der angegebenen Menge fortlaufend zugeführt, so daß während des gesamten Zerkleinerungsvorganges Wasser und/oder Glykol anwesend ist. Die durch die Zerkleinerung erhaltenen Teilchen werden vom eingesetzten Wasser und/oder Glykol abgetrennt durch Verwendung eines Siebes, durch Dekantieren oder Zentrifugieren.

Es ist festgestellt worden, daß die Trennwirkung der eingesetzten Flüssigkeit durch den zusätzlichen Einsatz eines Netzmittels in der Regel erhöht wird. Die Menge an Netzmittel, das vorzugsweise in der Flüssigkeit enthalten ist, kann in weiten Grenzen variieren. Die angestrebte Netzwirkung während des Zerkleinerungsvorganges wird in der Regel mit einer Menge von 0,05 bis 5 Gew.-Teilen Netzmittel, vorzugsweise 0,1 bis 1 Gew.-Teilen Netzmittel, pro 100 Gew.-Teile Flüssigkeit erreicht.

In dem vom Großteil der eingesetzten Flüssigkeit, Wasser und/oder Glykol, (mit oder ohne Netzmittel) abgetrennten Zerkleinerungsgut wird in einem weiteren Verfahrensschritt diejenige Menge an Flüssigkeit eingestellt, die erforderlich ist, um die angestrebte Rieselfähigkeit zu gewährleisten. Der zur Erreichung der Rieselfähigkeit erforderliche Gehalt an Flüssigkeit beträgt im allgemeinen 0,5 bis 5 Gew.-%, vorzugsweise 1 bis 3 Gew.-%, Gewichtsprozente bezogen auf das Gewicht der rieselfähigen Teilchenmischung. Diese Restflüssigkeitsmenge erhält man in der Regel nach dem genannten Abtrennen durch Sieben, Dekantieren oder Zentrifugieren. Nach Abschluß des Verfahrensschrittes, Einstellen des Restgehaltes an Flüssigkeit, liegt also die angestrebte rieselfähige Teilchenmischung vorzugsweise in Form von Schnitzeln vor.

Das erfindungsgemäße Verfahren gewährleistet eine wirtschaftliche Aufarbeitung von Kunststoffabfällen, die mehr oder weniger mit Klebstoff beschichtet sind. Das Verfahren ist einfach in der Durchführung und führt zu einer gut rieselfähigen Teilchenmischung des eingesetzten Abfalls. Die rieselfähige Mischung kann nach Zugabe von beispielsweise Kalk oder Talkum zur Kompensation des anwesenden Klebstoffs weiterverarbeitet werden, zum Beispiel auf Extrudern, Kalandern, Spritzgußmaschinen und dergleichen. Trennt man den Klebstoff vorher in einem geeigneten Bearbeitungsschritt ab, können die Schnitzel ohne Beimengung von Füllstoffen, wie erwähnt, weiterverarbeitet werden.

Die Erfindung bezieht sich auch auf ausgewählte rieselfähige Mischungen aus Polyvinylchlorid-Klebebandfolienabfall, der mit bei 10 bis 30 °C wasser- und glykolunlöslichem, kautschukbasiertem Klebstoff beschichtet ist. Die erfindungsgemäßen Mischungen bestehen im wesentlichen aus Schnitzeln von diesem Abfall, die einen Wassergehalt (als Trennflüssigkeit) von 0,5 bis 5 Gew.-% aufweisen, vorzugsweise 1 bis 3 Gew.-%, Gewichtsprozente bezogen auf das Gewicht der (Wasser enthaltenden) rieselfähigen Schnitzelmischung. Eine bevorzugte erfindungsgemäße Schnitzelmischung enthält neben der genannten Wassermenge auch ein Netzmittel in einer Menge von 0,01 bis 0,5 Gew.-%, vorzugsweise 0,03 bis 0,1 Gew.-%, Gewichtsprozente bezogen auf das Gewicht der (Wasser- und Netzmittel enthaltenden) rieselfähigen Schnitzelmischung. Die Herstellung der erfindungsgemäßen rieselfähigen Mischungen aus Polyvinylchlorid-Klebebandfolienabfall erfolgt nach dem oben beschriebenen Verfahren, bei dem der mit Klebstoff mehr oder weniger stark beschichtete Abfall in Anwesenheit von Wasser zu Schnitzeln zerkleinert wird und in der erhaltenen Schnitzelmischung die angegebene Restwassermenge eingestellt wird. Dabei stellt sich auch die angegebene Menge an Netzmittel ein, das beim Zerkleinerungsvorgang gegebenenfalls eingesetzt worden ist (es versteht sich von selbst, daß eine größere Menge an Netzmittel einzusetzen ist, um in der fertigen rieselfähigen Mischung die angegebene Netzmittelmenge vorliegen zu haben, weil beim genannten Abtrennen der Flüssigkeit zwangsläufig auch Netzmittel abgetrennt wird; andererseits verbleibt gemeinsam mit der Restflüssigkeit auch eingesetztes Netzmittel in der Teilchenmischung).

Wie bereits erwähnt, kann die Trennwirkung der eingesetzten Flüssigkeit durch Zugabe von Netzmittel in der Regel erhöht werden. Als Netzmittel, insbesondere in Kombination mit Wasser als Trennflüssigkeit, können die üblichen anionischen, kationischen und/oder nicht-ionischen Verbindungen eingesetzt werden.
Geeignete anionische Netzmittel sind die bekannten C₆ bis C₂₂-Alkansulfonate, C₆ bis C₂₂-α-Olefinsulfonate, (C₆ bis C₂₂-Alkyl)-benzolsulfonate, C₆ bis C₂₂-Fettalkoholsulfate und die ethoxylierten C₆ bis C₂₂-Fettalkoholsulfate mit 1 bis 20 Ethylenoxid-Einheiten. Als Beispiele seien im einzelnen genannt:
Natrium-C₁₃ bis C₁₇-Alkansulfonat, Natrium-C₁₄ bis C₁₆-α-Olefinsulfonat, Natriumdodecylbenzolsulfonat, Natriumlaurylsulfat, Natriumcocosalkylsulfat und Natrium-C₁₂ bis C₁₄-Alkylsulfat, ethoxyliert mit 3 mol Ethylenoxid.
Geeignete kationische Netzmittel sind die bekannten quartären Ammoniumsalze entsprechend der Formel N⁺(R¹,R²,R³,R⁴)X⁻, worin R¹ bis R⁴, gleich oder verschieden, vorzugsweise Alkylreste mit 1 bis 22 C-Atomen bedeuten, mit der Maßgabe, daß mindestens ein Alkylrest langkettig ist, das heißt mehr als 6 C-Atome aufweist, vorzugsweise 8 bis 18 C-Atome, und X⁻ das Anion ist, vorzugsweise Chlorid, Bromid, Phosphat oder Sulfat. Als Beispiele seien im einzelnen genannt:
Lauryltrimethylammoniumchlorid, Talgalkyltrimethylammoniumchlorid, Dioctyldimethylammoniumchlorid, Octyldecyldimethylammoniumchlorid und Dioleyldimethylammoniumchlorid.
Geeignete nicht-ionische Netzmittel sind die bekannten Polyether aus der Gruppe der Oxalkylate von C₈ bis C₁₈-Alkoholen (Fettalkoholen, Oxoalkoholen), (C₄ bis C₁₂-Alkyl)-phenolen (mono-, di- oder trialkylsubstituiert), C₈ bis C₁₈-Fettsäuren, C₈ bis C₁₈-Fettaminen, C₈ bis C₁₈-Fettsäureamiden und (C₈ bis C₁₈-Fettsäure)-ethanolamiden mit jeweils 2 bis 30, vorzugsweise 4 bis 15 Ethylenoxid-Einheiten, Propylenoxid-Einheiten oder Ethylenoxid- und Propylenoxid-Einheiten (in der Oxalkylatgruppe) und aus der Gruppe der Ethylenoxid/Propylenoxid-Blockpolymeren, die aus einem Propylenoxid-Innenblock mit einem Molekulargewicht von 1 000 bis 3 000 und 5 bis 50 Gew.-% (ankondensiertem) Ethylenoxid bestehen, Gewichtsprozente bezogen auf das Blockpolymere. Bevorzugte nicht-ionische Tenside sind die genannten Oxalkylate in Form der Polyethylenglykolether (Oxethylate) und Ethylenoxid/Propylenoxid-Blockpolymere, die aus einem Propylenoxid-Innenblock mit einem Molekulargewicht von 1 500 bis 2 500 und 10 bis 30 Gew.-% Ethylenoxid bestehen, Gewichtsprozente bezogen auf das Blockpolymere.

Die Erfindung wird nun an Beispielen noch näher erläutert.

### Beispiel 1

### Zerkleinern (in der Technik auch Mahlen genannt) von Polyvinylchlorid-(PVC)-Klebebandfolienabfällen in Anwesenheit von Wasser

- Art und Menge der zu mahlenden Abfälle:
   Randschnittwickel aus der PVC-Klebebandfolienherstellung mit unterschiedlichen Abmessungen, das heißt circa 30 cm im Durchmesser und circa 10 bis 30 cm breit; Breite des aufgespulten Randschnittbändchens: circa 5 bis 15 mm, davon etwa die Hälfte mit Kleber beschichtet; Einzelgewicht der Randschnittwickel: 1 bis 20 kg; gesamte Versuchsmenge: 500 kg
- Verwendete Mühle:
   Schneidmühle mit einem Nenndurchsatz von 500 kg pro Stunde
- Durchführung:
   Die Mühle wird eingeschaltet, und mittels der an den Innenseiten des Aufgabeschachtes angebrachten Düsen wird mit Einspeisung von Wasser in die Mühle begonnen. Es wird ein konstanter Wasserzufluß von 1 l pro Minute eingestellt und während des einstündigen Mahlens der genannten 500 kg Abfall aufrechterhalten. Kurz nach Beginn der Wassereinspeisung wird mit der gleichmäßigen Zugabe der Randschnittwickel begonnen. Die Menge an eingesetztem Wasser beträgt also 12 Gew.-Teile pro 100 Gew.-Teile Abfall. Das Mahlgut wird durch die vom Rotor der Mühle erzeugte Fliehkraft über ein Sieb mit einer lichten Maschenweite von 5 mm kontinuierlich ausgetragen. Die Abtrennung des Wassers vom Mahlgut wird mittels eines Rüttelsiebes durchgeführt. Dabei verbleibt nur jener Teil des eingesetzten Wasser im Mahlgut, der daran mehr oder weniger fest haftet. Das so erhaltene feuchte Mahlgut wird in Säcke abgefüllt.
- Ergebnis:
   Das Mahlgut besteht aus Schnitzeln mit einer mittleren Korngröße von 5 mm und weist einen Restwassergehalt von 3 Gew.-% auf (Gewichtsprozente bezogen auf das Gewicht des Wasser enthaltenden Mahlgutes). Die feuchte Schnitzelmischung ist gut rieselfähig und bleibt es, solange sie feucht ist, auch nach mehrwöchiger Lagerung. In der Mühle sind keine an der Mühlenwand, den Messern oder am Auslaufsieb klebenden Teile des Mahlgutes vorhanden.

### Beispiel 2

### Mahlen von PVC-Klebebandfolienabfällen in Anwesenheit von tensidhaltigem Wasser

- Art und Menge der zu mahlenden Abfälle:
   Anfahrrollen und wegen Qualtitätsmängel nicht verwendungsfähige sogenannte Jumbo-Rollen aus der PVC-Klebebandfolienherstellung. Es handelt sich um bis zu 50 cm durchmessende und teilweise über 2 m breite Klebebandrollen. Vor dem Mahlen werden diese Rollen in circa 10 bis 20 cm breite Scheiben geschnitten; gesamte Versuchsmenge: 500 kg
- Verwendete Mühle:
   Schneidmühle wie in Beispiel 1
- Durchführung:
   Wie in Beispiel 1, wobei anstelle des reinen Wassers eine wäßrige Lösung eines anionischen Tensids eingesetzt wird, und zwar eine Lösung, bestehend aus 0,2 Gew.-Teilen Natriumlaurylsulfat und 100 Gew.-Teilen Wasser. Diese Trennflüssigkeit wird in einer Menge von 0,4 l pro Minute durch die Düsen eingespeist. Die Menge an eingesetzter tensidhaltiger Flüssigkeit beträgt also 4,8 Gew.-Teile pro 100 Gew.-Teile Abfall.
- Ergebnis:
   Das Mahlgut besteht aus Schnitzeln mit einer mittleren Teilchengröße von 5 mm und weist einen Restwassergehalt von 2 Gew.-% und einen Natriumlaurylsulfatgehalt von 0,04 Gew.-% auf (Gewichtsprozente jeweils bezogen auf das Gewicht des wasser- und tensidhaltigen Mahlgutes). Die feuchte Schnitzelmischung ist gut rieselfähig. Sie weist im Vergleich zur Schnitzelmischung des Beispiels 1 den weiteren Vorteil auf, daß die Teilchen auch nach vollständigem Trocknen der Mischung nicht miteinander und mit Fremdmaterialien verkleben, das heißt, auch die trockene Schnitzelmischung ist gut rieselfähig. In der Mühle sind - ebenso wie in Beispiel 1 - keine klebenden Abfallteilchen vorhanden.

### Beispiel 3

### Mahlen von PVC-Klebebandfolienabfällen in Anwesenheit von Monoethylenglykol

- Art und Menge der zu mahlenden Abfälle:
   Zu etwa gleichen Teilen Randschnittwickel und Anfahrrollen aus der PVC-Klebebandfolienherstellung, wie in den vorhergehenden Beispielen beschrieben, von Hand mit einem Messer in etwa 20 bis 50 g Stücke vorzerkleinert; gesamte Versuchsmenge: 5 kg.
- Verwendete Mühle:
   Technikums-Schneidmühle
- Durchführung:
   Der Mühle werden im Verlauf von 30 Minuten die genannten 5 kg Abfall und 150 g Monoethylenglykol als Trennflüssigkeit zugeführt, wobei mit der Zufuhr des Monoethylenglykols begonnen wird. Da die Technikums-Mühle über keine Einspeisedüsen verfügt, wird das Ethylenglykol, ebenso wie der Abfall, in den Aufgabeschacht eingegeben. Die Menge an eingesetztem Ethylenglykol beträgt also 3 Gew.-Teile pro 100 Gew.-Teile Abfall. Alles Weitere erfolgt wie in Beispiel 1.
- Ergebnis:
   Das Mahlgut besteht aus Schnitzeln mit einer Korngröße von 5 mm und weist einen Restethylenglykolgehalt von 2 Gew.-% auf (Gewichtsprozente bezogen auf das Gewicht des Monoethylenglykol enthaltenden Mahlgutes). Die monoethylenglykolfeuchte Schnitzelmischung ist gut rieselfähig. Die Rieselfähigkeit bleibt auch nach einer langen Lagerungszeit erhalten. In der Mühle sind - ebenso wie bei den vorhergehenden Beispielen - keine klebenden Abfallteilchen vorhanden.

## Patentansprüche

1. Verfahren zur Herstellung einer rieselfähigen Mischung von Polyethylen-, Polypropylen-, Polystyrol-, Polyester- oder Polyvinylchlorid-Kunststoffabfall beschichtet mit wasser- und glykolunlöslichem Klebstoff auf der Basis von Kautschuk, dadurch gekennzeichnet, daß
a) der mit Klebstoff beschichtete Kunststoffabfall in Gegenwart von 1 bis 30 Gew.-Teilen flüssigem Wasser und/oder Glykolen pro 100 Gew.-Teile Kunststoffabfall bei 10 bis 30 °C zerkleinert wird, und
b) die durch Verwendung eines Siebes, durch Dekantieren oder Zentrifugieren von der Flüssigkeit abgetrennten Kunststoffabfallteilchen auf einen Restflüssigkeitsgehalt von 0,5 bis 5 Gew.-%, bezogen auf das Gewicht der rieselfähigen Teilchenmischung, eingestellt werden.

2. Verfahren nach Anspruch 1, dadurch gekennzeichnet, daß das Wasser und/oder Glykol ein Netzmittel in einer Menge von 0,05 bis 5 Gew.-Teilen pro 100 Gew.-Teile Wasser und/oder Glykol enthält.

3. Verfahren nach Anspruch 1 oder 2, dadurch gekennzeichnet, daß der mit Klebstoff beschichtete Kunststoffabfall in einer Schneidmühle zu Teilchen mit einer Größe von 1 bis 10 mm zerkleinert wird.

4. Rieselfähige Mischung aus Polyvinylchlorid-Klebebandfolienabfall beschichtet mit bei 10 bis 30 °C wasser- und glykolunlöslichem, kautschukbasiertem Klebstoff, bestehend im wesentlichen aus Schnitzel von diesem Abfall, die einen Wassergehalt von 0,5 bis 5 Gew.-% aufweisen, Gewichtsprozente bezogen auf das Gewicht der rieselfähigen Schnitzelmischung.

5. Mischung nach Anspruch 4, gekennzeichnet durch einen Netzmittelgehalt von 0,01 bis 0,5 Gew.-%, bezogen auf das Gewicht der rieselfähigen Schnitzelmischung.

## Claims

1. A process for preparing a free-flowing mixture of waste polyethylene, polypropylene, polystyrene, polyester or poly(vinyl chloride) plastic material coated with water- and glycol-insoluble adhesive based on rubber, which comprises
a) comminuting the adhesive-coated waste plastic material in the presence of 1 to 30 parts by weight of liquid water and/or glycols per 100 parts by weight of waste plastic material at 10 to 30°C and
b) adjusting to a residual liquid content of 0.5 to 5% by weight, based on the weight of the free-flowing particle mixture, the waste plastic material particles separated off from the liquid by using a sieve, by decanting or centrifuging.

2. The process as claimed in claim 1, wherein the water and/or glycol contains a wetting agent in an amount of 0.05 to 5 parts by weight per 100 parts by weight of water and/or glycol.

3. The process as claimed in claim 1 or 2, wherein the adhesive-coated waste plastic material is comminuted in a cutting mill to give particles having a size of 1 to 10 mm.

4. A free-flowing mixture of waste poly(vinyl chloride) adhesive tape film coated with rubber-based adhesive which is water- and glycol-insoluble at 10 to 30°C, essentially comprising chips of this waste which have a water content of 0.5 to 5% by weight, percentages by weight based on the weight of the free-flowing chip mixture.

5. The mixture as claimed in claim 4, wherein the mixture has a wetting agent content of 0.01 to 0.5% by weight, based on the weight of the free-flowing chip mixture.

## Revendications

1. Procédé pour fabriquer un mélange à écoulement libre de déchets plastiques de polyéthylène, de polypropylène, de polystyrène, de polyester ou de poly(chlorure de vinyle), enduits d'un adhésif insoluble dans l'eau et dans le glycol, à base de caoutchouc, caractérisé en ce que
a) les déchets plastiques enduits d'un adhésif sont broyés en présence de 1 à 30 parties en poids d'eau liquide et/ou de glycols, pour 100 parties en poids de déchets plastiques, à une température de 10 à 30°C, et
b) les particules de déchets plastiques séparées du liquide par utilisation d'un tamis, par décantation ou par centrifugation, sont ajustées à une teneur résiduelle en liquide de 0,5 à 5 % en poids par rapport au poids du mélange de particules à écoulement libre.

2. Procédé selon la revendication 1, caractérisé en ce que l'eau et/ou le glycol contient un mouillant en une quantité de 0,05 à 5 parties en poids pour 100 parties en poids d'eau et/ou de glycol.

3. Procédé selon la revendication 1 ou 2, caractérisé en ce que les déchets plastiques enduits d'un adhésif sont broyés dans un broyeur à couteaux pour être transformés en particules ayant une granulométrie de 1 à 10 mm.

4. Mélange à écoulement libre de déchets de feuilles pour rubans adhésifs en poly(chlorure de vinyle) enduits d'un adhésif à base de caoutchouc et insoluble dans l'eau ou dans le glycol à une 10 à 30°C, constitué essentiellement de copeaux de ces déchets, copeaux ayant une teneur en eau de 0,5 à 5 % en poids, les pourcentages en poids étant rapportés au poids du mélange de copeaux à écoulement libre.

5. Mélange selon la revendication 4, caractérisé par une teneur en mouillant de 0,01 à 0,5 % en poids, par rapport au poids du mélange de copeaux à écoulement libre.
